# EUROPÄISCHE PATENTSCHRIFT

(11) **EP 2 305 534 B1**
(45) Veröffentlichungstag und Bekanntmachung des Hinweises auf die Patenterteilung: **29.07.2015**
(21) Anmeldenummer: 09012376.1
(22) Anmeldetag: 30.09.2009
(51) Int. Cl.: B61L 27/04, B61L 25/02

(54) **Anordnung und Verfahren zur Aktivierung eines sicheren Betriebszustandes für ein fahrerloses Transportmittel**
Assembly and method for activating a secure operating state for a driver-less means of transport
Agencement et procédé d'activation d'un état de fonctionnement de sécurité pour un moyen de transport sans conducteur

(43) Veröffentlichungstag der Anmeldung: 06.04.2011
(73) Patentinhaber: Siemens Aktiengesellschaft, 80333 München (DE)
(72) Erfinder: Müller, Oswald, 63695 Glauburg (DE); Niemeyer, Heinrich, 90559 Burgthann (DE)

(56) Entgegenhaltungen:
- CH-A5- 677 469
- DE-A1-102007 060 303
- DE-B3-102007 026 399
- GUNSELMANN W ET AL: "Weltweit erste fuehrerlose U-Bahn im Mischbetrieb in Nuernberg" ELEKTRISCHE BAHNEN, OLDENBOURG INDUSTRIEVERLAG, MUNCHEN, DE, Bd. 106, Nr. 8-9, 1. August 2008 (2008-08-01), Seiten 371-374,376, XP001516065 ISSN: 0013-5437
- PETERSEN, KLEIN: "Die Automatisierungstechnik der neuen Kabinenbahn am Flughafen Düsseldorf" ZEITSCHRIFT FUR EISENBAHNWESEN UND VERKEHRSTECHNIK. DIE EISENBAHNTECHNIK + GLASERS ANNALEN, G. SIEMENS VERLAGSBUCHHANDLUNG. BERLIN, DE, Bd. 125, Nr. 4, 1. April 2001 (2001-04-01) , Seiten 139-147, XP001011957 ISSN: 0941-0589
- GOTTSCHLICH B: "Automatisches Leit- und Sicherungssystem für den fahrerlosen Betrieb der H-Bahn Dortmund" SIGNAL + DRAHT, TELZLAFF VERLAG GMBH. DARMSTADT, DE, Bd. 84, Nr. 7 / 08, 1. Juli 1992 (1992-07-01), Seiten 235-238, XP000316378 ISSN: 0037-4997

## Beschreibung

Die Erfindung betrifft eine Anordnung mit einem fahrerlosen Transportmittel zur Aktivierung eines sicheren Betriebszustandes gemäß dem Oberbegriff des Patentanspruchs 1, und ein Verfahren für ein selbstfahrendes fahrerloses Transportmittel zur Aktivierung eines sicheren Betriebszustandes gemäß dem Oberbegriff des Patentanspruchs 8.

Im Zuge der fortschreitenden Automatisierung von Transportaufgaben, insbesondere im Bereich der Fertigung von Automobilen und anderen Gütern, werden häufig fahrerlose Transportmittel eingesetzt. Beispielsweise werden für Fertigungslinien der Automobilindustrie Elektro-Hänge-Bahnen (EHB) für den Transport von Karosserien und Anbauteilen benutzt. Diese Transportmittel - oft auch EMS = Electrical Monorail Systems genannt - bestehen regelmäßig aus einem Schienensystem und den dazugehörigen, meist hängenden, Fahrzeugen. Diese Transportmittel verfügen über einen eigenen elektrischen Antrieb und werden mittels Stromabnehmer (Schleifern), die an einem mehrphasigen Stromschienen-System entlang geführt werden, mit elektrischer Energie versorgt.

In speziellen Fahrbereichen (Fertigungsbereichen) werden üblicher Weise Arbeiten an den jeweils beförderten Produkten durchgeführt. Dies bedeutet, dass in diesen Bereichen auch Menschen durch das sich bewegende fahrerlose Transportmittel bzw. die damit geführten Gegenstände potentiell gefährdet sind. Deswegen sind in solchen Bereichen Not-Aus-Taster o.ä. (allgemein: Bedienmittel) und Sensoren (Lichtschranken, Annäherungssensoren etc.) installiert, mit denen die fahrerlosen Transportmittel im jeweiligen Bereich im Falle einer unerwünschten Annäherung oder bei anderen Gefahren angehalten werden können. Dazu ist es bekannt, mittels der Not-Aus-Taster oder gesteuert durch die Sensoren im betrachteten Abschnitt (Segment) die Energieversorgung des Stromschienen-Systems abzuschalten, wodurch das oder die dort betriebene(n) Transportmittel zum sofortigen Stillstand kommen. Dieses Vorgehen hat sich jedoch in mehrfacher Hinsicht als nachteilig erwiesen. Die fahrerlosen Transportmittel und die damit bewegten Produkte und Bauteile weisen oft eine hohe Masse auf, wodurch im Falle eines abrupten Stopps stoßweise ein hoher mechanischer Impuls in die tragende Konstruktion des Schienensystems eingebracht wird. Dies führt zu einer hohen Materialbelastung sowohl im Schienensystem als auch seitens des fahrerlosen Transportmittels, und dies führt trotz großzügiger Dimensionierung aller betroffenen Bauteile auf Dauer häufig zu Schäden. Außerdem sind die fahrerlosen Transportmittel meist mit einer eigenen mitfahrenden Steuerung versehen, die nach einem derart realisierten "Not-Aus" erst wieder gestartet ("hochgefahren") und parametrisiert werden muss. Dies führt dazu, dass auch bei einem unbeabsichtigten oder nur kurzzeitig erforderlichen "Halt" die Wiederaufnahme des Regelbetriebs um oft mehrere Minuten verzögert wird.

Aus diesem Grund wird in weiterentwickelten Anordnungen durch das Betätigen eines Not-Aus-Tasters oder durch das Auslösen eines entsprechenden Sensors nur eine oder maximal zwei der (meist) drei Phasen der Versorgungsspannung abgeschaltet. Diese Teil-Abschaltung wird durch die Steuerung der fahrerlosen Transportmittel registriert, wodurch ein sicherer Betriebszustand, beispielsweise ein Not-Halt, angesteuert werden kann. Dadurch, dass die digitale Steuerung und der Stromrichter zur Energieversorgung des fahrerlosen Transportmittels über die verbliebenen Phasen weiterhin mit Energie versorgt werden, kann das fahrerlose Transportmittel entsprechend "sanft" gesteuert und abgebremst werden. Außerdem braucht für eine Wiederaufnahme des Regelbetriebs die digitale Steuerung nicht neu "hochgefahren" zu werden. Voraussetzung ist jedoch, dass das fahrerlose Transportmittel mit einer ausfall- oder "fehlersicheren" Steuerung ausgestattet ist; solche Steuerungen sind im Bereich der Automatisierungstechnik als "redundante" oder als "Fail-Safe"-Komponenten bekannt.

Auch mit der vorstehend beschriebenen Verbesserung weisen die bekannten Anordnungen jedoch den Nachteil auf, dass die Energieversorgung des Schienensystems, also das Stromschienen-System, entsprechend der Gefährdungsbereiche segmentiert sein muss, damit ein Not-Halt nicht die komplette Fertigungslinie stilllegt. Dies bedeutet, dass in einem betrachteten Fertigungsbereich, in dem Not-Aus-Taster und Sensoren installiert sind, die damit betätigte Abschaltung mit einer oder mehrerer Phasen der Energieversorgung in nur demselben Bereich (Segment) verknüpft sein darf. Das hat zur Folge, dass für ausgedehnte Fertigungsanlagen das Stromschienen-System eine Vielzahl von Einspeisepunkten und diesen zugeordneten Abschaltmitteln aufweisen muss, auch wenn für die Energieversorgung als solche nur wenige Einspeisepunkte benötigt würden. Ein weiterer Nachteil besteht in der fehlenden Flexibilität, die dadurch bedingt ist, dass bei einer Umgestaltung der verschiedenen Fertigungsbereiche der Schnitt der Segmente der Energieversorgung der fahrerlosen Transportmittel entsprechend angepasst werden muss. Dazu sind dann entsprechend aufwändige Eingriffe in die "Hardware" der Energieversorgung notwendig.

Aus der Druckschrift DE 10 2007 026 399 B3 - Rebbereh "Zonenorientiertes Sicherheitskonzept für unabhängige Transportsysteme" ist eine Anordnung bekannt, bei der ein Transportsystem in Schutzräume gegliedert ist und den Schutzräumen jeweils Not-Aus-Schalter zugeordnet sind. Ein Transportmittel bestimmt jeweils denjenigen Schutzraum, in welchem es sich befindet, und setzt sich im Falle eines Not-Aus-Befehls still, sofern seine Position mit dem Schutzraum korreliert, der dem betätigten Not-Aus-Schalter zugeordnet ist.

Die Druckschrift CH 677 469 A5 - Zimmermann et al. "Verfahren zur Steuerung der Bewegung schienengebundener selbstfahrender Förderwagen sowie Förderanlage zur Durchführung des Verfah rens" offenbart ein fahrerloses Transportmittel, bei dem längs des Streckennetzes Barcodes angeordnet sind, die mittels eines Transportmittel-seitigen Barcode-Lesegerätes ausgelesen werden und die der Positionsbestimmung des Transportmittels dienen.

Es ist eine Aufgabe der vorliegenden Erfindung, eine Anordnung und ein Verfahren für die Aktivierung eines sicheren Betriebszustandes für ein selbstfahrendes Transportmittel vorzuschlagen, womit eine sichere, materialschonende und in ihrer Konfiguration flexible Betriebsweise gegeben ist.

Es ist dabei ein zentraler Gedanke der vorliegenden Erfindung, dass durch den Einsatz zweier unabhängiger Messsysteme und den Einsatz einer fehlersicheren Auswertung innerhalb einer fehlersicheren Steuerung zuverlässig ein Positionswert für den Standort des fahrerlosen Transportmittels ermittelt bzw. erfasst wird. Weiter werden innerhalb des Streckenverlaufs des fahrerlosen Transportmittels Sicherheitsbereiche definiert. Über eine ebenfalls fehlersichere Erfassung der Not-Aus- bzw. Sicherheits-Sensorik sind dann sichere Abschaltungen in den definierten Sicherheitsbereichen möglich. Durch die fehlersichere (redundante) Positionserfassung des fahrerlosen Transportmittels kann dabei jederzeit festgestellt werden, ob sich dieses innerhalb desjenigen bestimmten definierten Segmentes des Fahrweges befindet, dem auch ein betätigter Not-Aus-Schalter oder ein ausgelöster Sicherheits-Sensor zugeordnet ist. Eine weitere Verbesserung der Sicherheit ergibt sich erfindungsgemäß, wenn die digitale Steuerung derart eingerichtet ist, dass bei Ausfall oder bei Störung eines diese mit dem Bedienelement oder dem Sensor verbindenden Datennetzes, der Einrichtung zur Positionserfassung des fahrerlosen Transportmittels, der Bedienelemente oder der Sensoren der sichere Betriebszustand oder ein sicherer Betriebszustand aktiviert wird.

Die Lösung der Aufgabe sieht insbesondere eine Anordnung mit einem fahrerlosen Transportmittel und zumindest einem externen Bedienelement oder externen Sensor zur Aktivierung eines sicheren Betriebszustandes vor, wobei das fahrerlose Transportmittel zur Nutzung eines Fahrweges mit bevorzugt einer Mehrzahl Weg-Segmente eingerichtet ist und die Anordnung zur Aktivierung des sicheren Betriebszustandes in den Fällen eingerichtet ist, in denen das zumindest eine Bedienelement betätigt wird oder der zumindest eine Sensor auslöst, und in denen sich das fahrerlose Transportmittel in einem dem betätigten Bedienmittel oder auslösendem Sensor zugeordneten der Weg-Segmente befindet. Dabei wird das fahrerlose Transportmittel vorzugsweise mittels einer digitalen Steuerung gesteuert, wobei die digitale Steuerung mittels eines Datennetzes mit dem zumindest einen Bedienmittel oder dem zumindest einen Sensor verbunden ist, und wobei die digitale Steuerung zum Zugriff auf eine redundante Einrichtung zur Positionserfassung des fahrerlosen Transportmittels eingerichtet ist. Die die digitale Steuerung ist zum Empfang von Meldungen über die Betätigung des Bedienmittels oder das Auslösen des Sensors eingerichtet, wobei die Meldungen jeweils eine Ortsinformation über das die jeweilige Meldung erzeugende Bedienmittel oder Sensor oder über ein mit dem Bedienmittel oder dem Sensor jeweils verknüpftes der Weg-Segmente umfasst, und wobei die digitale Steuerung im Falle des Empfangs einer der Meldungen zum jeweiligen Vergleich der derzeitigen Position oder des derzeit durch das fahrerlose Transportmittel benutzten der Weg-Segmente mit der Ortsinformation eingerichtet und im Falle eines positiven Vergleichs zur Aktivierung des sicheren Betriebszustandes eingerichtet ist. Bei einer solchen Anordnung kann durch einfache Definition von Segmenten und einfache Zuordnung von Schaltern bzw. Sensoren zu diesen definierten Segmenten eine Vielzahl von "Sicherheitsbereichen" flexibel eingerichtet werden. Dadurch, dass eine Abschaltung der Versorgungsspannung des fahrerlosen Transportmittels nicht mehr notwendig ist, kann das fahrerlose Transportmittel nach einer Aufhebung des "Not-Halts" bzw. nach einer Beseitigung eines Hindernisses sofort wieder angefahren werden. Die digitale Steuerung kann wahlweise mit dem fahrerlosen Transportmittel mitgeführt werden, oder aber auch ortsfest angeordnet sein. Anstelle der Ortsinformation kann auch eine andere Information genutzt werden, aus der die Ortsinformation dann gewonnen werden kann. Dies gilt insbesondere für Bedienelemente und Sensoren, die direkt an jeweils einen eigenen Eingang einer Steuerung angeschlossen sind; in diesem Fall ist die Ortsinformation über die Port-Nummer des jeweiligen Eingangs ermittelbar. Alternativ können Bedienelemente und Sensoren auch eindeutige Seriennummern ("ID's") aufweisen, die in den Meldungen jeweils enthalten sind. Aus einer entsprechend gepflegten Tabelle lässt sich dann die Ortsinformation auslesen.

Die Lösung der Aufgabe sieht weiterhin ein Verfahren für ein selbstfahrendes fahrerloses Transportmittel zur Aktivierung eines sicheren Betriebszustandes vor, wobei das fahrerlose Transportmittel mittels der Betätigung eines Bedienelementes oder mittels des Auslösens eines Sensors in den sicheren Betriebszustand versetzt wird. Dazu wird der Fahrweg des fahrerlosen Transportmittels bevorzugt in mehrere Weg-Segmente gegliedert, und das Bedienelement oder der Sensor wird zumindest einem der Weg-Segmente zugeordnet. Zur Aktivierung des sicheren Betriebszustandes wird eine Meldung von dem Bedienelement oder dem Sensor zu einer digitalen Steuerung des fahrerlosen Transportmittels übermittelt, wobei die Meldung eine Ortsinformation oder dgl. über den Standort des Bedienelementes oder des Sensors oder über ein von dem Befehl jeweils betroffenes der Weg-Segmente des Fahrweges umfasst, und wobei die digitale Steuerung mittels eines redundanten Positionserfassungssystems die zum Zeitpunkt der Verarbeitung der Meldung vorliegende Position des fahrerlosen Transportmittels oder das zu diesem Zeitpunkt von dem fahrerlosen Transportmittel befahrene Weg-Segment erfasst und mit der in der jeweils zu verarbeitenden Meldung vorliegende Ortinformation oder Identifikationsnummer vergleicht und im Falle einer Übereinstimmung den sicheren Betriebszustand für das fahrerlose Transportmittel aktiviert. Im Falle der Übermittlung einer Identifikationsnummer o.ä. sind bevorzugt in der digitalen Steuerung, alternativ in einem externen Datenspeicher, Verknüpfungs-Informationen zwischen diesen Identifikationsnummern und den definierten Weg-Segmenten gespeichert. Mittels dieses Verfahrens können im Zusammenhang mit der erfindungsgemäßen Anordnung genannten Vorteile realisiert werden.

Erfindungsgemäß ist der sichere Betriebszustand ein Not-Halt des fahrerlosen Transportmittels oder eines von diesem mitgeführten Bauteils, beispielsweise eines Hubwerks.

Erfindungsgemäß weist die redundante Einrichtung zur Positionserfassung zumindest 2 Barcode-Lesegeräte zur fortlaufenden und fehlersicheren Bestimmung der derzeitigen Position des fahrerlosen Transportmittels oder des derzeit durch das fahrerlose Transportmittel benutzten der Weg-Segmente auf, wobei die zumindest 2 Barcode-Lesegeräte zum Abtasten einer einzelnen Barcode-Leiste BCL mit einem Versatz zueinander in Fahrtrichtung, oder zum orthogonal zur Fahrtrichtung versetzen Abtasten einer doppelt hohen Barcode-Leiste BCL oder zweier benachbarter Barcode-Spuren der Barcode-Leiste BCL angeordnet sind.

Vorteilhafte Ausgestaltungen der erfindungsgemäßen Anordnung sind in den abhängigen Patentansprüchen angegeben. Die dabei beschriebenen Merkmale und Vorteile gelten sinngemäß auch für das erfindungsgemäße Verfahren.

In einer vorteilhaften Ausgestaltung der Erfindung kann zwischen verschiedenen sicheren Betriebszuständen differenziert werden. So kann beispielsweise in Abhängigkeit eines bisherigen Betriebszustandes und/oder in Abhängigkeit von demjenigen Bedienmittel oder Sensor, welcher zur Aktivierung des sicheren Betriebszustandes führt, eine bestimmte von einer Mehrzahl verfügbarer Maßnahmen ausgewählt werden. So kann beispielsweise bei einer "Vorwärtsfahrt" des Transportmittels und dem Auslösen eines Sensors, welcher ein Hindernis im Fahrweg detektiert, der sichere Betriebszustand darin bestehen, dass das fahrerlose Transportmittel zunächst ein Stück rückwärts verfahren wird, und erst danach angehalten wird. Beim Absenken einer Last kann das Drücken eines Not-Aus-Tasters hingegen dazu führen, dass die Last zunächst wieder ein Stück weit angehoben wird, bevor das Hubwerk deaktiviert wird. Somit kann ein sicherer Betriebszustand auch durch das Abarbeiten einer Befehlskette erreicht werden. Ein bevorzugtes Bedienelement ist ein Not-Aus-Taster. Neben der allgemein üblichen ortsfesten Anordnung kann dieser in einer vorteilhaften Ausgestaltung auch mobil, beispielsweise als Funkschalter oder als ein sog. "Soft-Key" eines mobilen Datenverarbeitungsgerätes ausgeführt sein. Im Falle der mobilen Ausführung kann vorteilhaft das Bedienelement mit einem Positionserfassungssystem zur Erfassung der Position dieses Bedienmittels ausgestattet sein, um den sicheren Betriebszustand von fahrerlosen Transportmitteln in demjenigen Segment oder Bereich durchzuführen, in dem sich das Bedienmittel zum Zeitpunkt der Betätigung befindet.

Bekannte und bewährte Sensoren sind Lichtvorhänge, Lichtgitter, Lichtschranken oder Laser-Scanner, mit denen die Anwesenheit einer Person oder eines Hindernisses oder die Annäherung einer Person oder eines Hindernisses erfasst werden können. Ein solches sich annäherndes Hindernis kann auch ein weiteres fahrerloses Transportmittel sein. In diesem letztgenannten Fall können auch die Bewegungsdaten der Steuerungen von anderen fahrerlosen Transportmitteln mit dem Fahrweg des betrachteten fahrerlosen Transportmittels verglichen werden, so dass eine automatische Aktivierung eines sicheren Betriebszustandes zur Vermeidung von einer Kollision führt. In diesem Fall wird die - meist durch eine Software realisierte - Schaltung zur Warnung von bevorstehenden Kollisionen als "Sensor" betrachtet.

Vorteilhaft ist die digitale Steuerung des fahrerlosen Transportmittels fehlersicher, beispielsweise doppelt oder "redundant", ausgeführt. Alternativ oder zusätzlich können spezielle Schaltkreise, beispielsweise sog. "Watch Dogs", eingesetzt werden, um die Betriebsbereitschaft der digitalen Steuerung zu überwachen und um bei Versagen derselben selbsttätig einen sicheren Betriebszustand einzuleiten, beispielsweise durch Abschalten der Energieversorgung eines Antriebs. Dabei kann die digitale Steuerung entweder Bestandteil des fahrerlosen Transportmittels sein, oder aber ortsfest ausgeführt sein. Während im ersten Fall außer dem Schienen- und Stromabnehmersystem keine weitere elektrische Verbindung zum fahrerlosen Transportmittel hin geschaffen werden muss, da das Datennetz zur Übertragung von Meldungen drahtlos, beispielsweise als industrielles WLAN ausgeführt sein kann, ergibt sich im an zweiter Stelle genannten Fall der Vorteil, dass mit ein- und derselben digitalen Steuerung mehrere fahrerlose Transportmittel oder mehrere andere Einrichtungen gesteuert werden können.

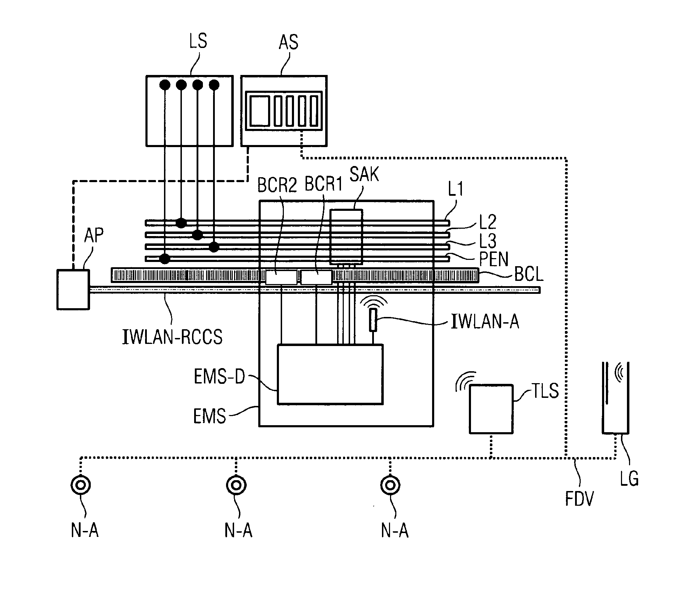

Ein Ausführungsbeispiel der erfindungsgemäßen Anordnung wird nachfolgend anhand der Zeichnung erläutert. Es dient gleichzeitig der Erläuterung des erfindungsgemäßen Verfahrens.

Dabei zeigt die einzige Figur schematisch ein fahrerloses Transportmittel mit den für die Aktivierung eines sicheren Betriebszustandes erforderlichen wesentlichen Komponenten.

In der Figur ist schematisch ein fahrerloses Transportmittel EMS ("Electrical Monorail System") dargestellt, welches einen Stromabnehmer-Kasten SAK aufweist. In dem Stromabnehmer-Kasten SAK ist eine Energieversorgung des Transportmittels EMS über ein (nicht dargestelltes) Schleifersystem an ein Stromschienen-System mit den Phasen L1, L2, L3 und dem Erd-/Neutralleiter PEN verbunden. Das Stromschienen-System wird über einen Leistungsschrank LS mit elektrischer Energie versorgt. Entlang des Fahrweges, also einem Schienen-System des fahrerlosen Transportmittels EMS, ist zum Zwecke der Positionserfassung eine Barcode-Leiste BCL angebracht, die mittels der seitens der fahrerlosen Transportmittels EMS angebrachten Barcode-Lesegeräte BCR1, BCR2 ("Barcode-Reader") gelesen wird.

Zur redundanten (fehlersicheren) Positionserfassung sind alle diesbezüglichen Komponenten, insbesondere die Barcode-Lesegeräte BCR1, BCR2, doppelt vorhanden. Dabei sind erfindungsgemäß und wie in der Figur dargestellt die beiden Barcode-Lesegeräte BCR1, BCR2 in einer ersten Alternative nebeneinander angeordnet und lesen mit einem Versatz (Offset) dieselbe Barcode-Spur der Barcode-Leiste BCL aus; der Offset wird von der Software der digitalen Steuerung EMS-D aus den Messwerten eines der Barcode-Lesegeräte BCR1, BCR2 wieder herausgerechnet. Durch den Versatz ist sichergestellt, dass auch bei einer stellenweisen Verunreinigung oder Beschädigung der Barcode-Leiste BCL zumeist eines der beiden Signale verfügbar ist. Alternativ kann in einer zweiten erfindungsgemäßen Alternative die Barcode-Leiste BCL auch doppelt oder in doppelter Höhe ausgeführt sein, wobei die beiden Barcode-Lesegeräte BCR1, BCR2 übereinander in unterschiedlichen Spuren geführt werden; hier tritt ein Offset im Regelfall nicht auf. Die Einrichtungen zur Positionserfassung weisen darüber hinaus (nicht dargestellt) Diagnoseeinrichtungen auf, die eine Fehlfunktion sicher erkennen und melden.

Das fahrerlose Transportmittel EMS weist eine fehlersichere (redundant aufgebaute) digitale Steuerung EMS-D ("Electrical Monorail System - Driver") auf, welche mit den Einrichtungen zur Positionserfassung, insbesondere den Barcode-Lesegeräten BCR1, BCR2 und der damit verknüpften und zuvor beschriebenen Diagnoseeinrichtung verbunden ist. Weiter ist das fahrerlose Transportmittel EMS mit einer Antenne IWLAN-A für ein industrielles drahtloses Datennetz ausgerüstet. Die Antenne IWLAN-A wird dabei entlang eines parallel zur dem Schienensystem verlegten Leckwellenleiter IWLAN-RCCS ("Industrial W-LAN RCoax Cable Segment") geführt, welcher als ortfeste Antenne wirkt und dazu über einen Zugriffspunkt AP ("Access Point") mit einer ortsfesten Anlagensteuerung AS verbunden ist. Die Anlagensteuerung AS ist wiederum mit einem fehlersicheren Datenverarbeitungsnetz FDV verbunden; die Anlagensteuerung AS, der Zugriffspunkt AP und die Antenne IWLAN-RCCS bilden somit ein fehlersicheres Datennetz. An dem Datennetz FDV sind als Bedienelemente die Not-Aus-Taster N-A, ein Gerät zur lasergestützten Erfassung von Personen und Hindernissen TLS ("Tastender Laser Scanner"; oft auch "Personal Laser Scanner" genannt) und - als Beispiel für eine weitere optische Überwachung eines Fahrweges - ein Lichtgitter LG angeschlossen.

Die Bedienelemente N-A und die Sensoren TLS, LG weisen jeweils eine eindeutige Identifikationsnummer auf, die beim Betätigen der Bedienelemente bzw. bei einem Auslösen der Sensoren an die Anlagensteuerung AS gemeldet wird. In der Anlagensteuerung AS ist eine Tabelle gespeichert, in der jede Identifikationsnummer mit einer Ortsangabe verknüpft ist. Dabei betrifft die Ortsangabe verschiedene Bereiche (Segmente) einer industriellen Produktionsanlage, in der das fahrerlose Transportmittel EMS betrieben wird.

Im Folgenden sei angenommen, dass das Schienensystem des fahrerlosen Transportmittels EMS verschiedene Bereiche bzw. Segmente der Produktionsanlage durchfährt, wobei die in der Figur dargestellten Bedienelemente N-A und Sensoren TLS, LG einem bestimmten Bereich zugeordnet sind, in dem Menschen an Produktionsgütern, die durch das fahrerlose Transportmittel EMS bewegt werden, arbeiten. Ein solcher Bereich und somit ein solches Segment des Fahrweges wird als "sicherheitskri- tisch" betrachtet. Das bedeutet, dass ein Betätigen der Bedienelemente N-A bzw. ein Auslösen der Sensoren TLS, LG jedes fahrerlose Transportmittel EMS in einen sicheren Betriebszustand (hier: Not-Halt) versetzten soll, welches sich im betrachteten definierten Segment mit diesen Bedienelementen N-A bzw. Sensoren TLS, LG befindet. Dazu wird im Folgenden erläutert, wie eine Ortsinformation über ein betätigtes Bedienelement N-A bzw. ein ausgelösten der Sensoren TLS, LG an die digitale Steuerung EMS-D des fahrerlosen Transportmittels EMS übertragen und dort mit der derzeitigen Position des fahrerlosen Transportmittels EMS verglichen wird, wobei im Falle eines positiven Vergleiches der angestrebte sichere Betriebszustand angesteuert wird. Alternativ zu der dabei beschriebenen Anordnung und dem dabei beschriebenen Verfahren kann die Prüfung, ob sich das fahrerlose Transportmittel EMS in demjenigen Segment des Fahrweges befindet, in welchem ein Bedienmittel N-A bzw. ein Sensor TLS, LG aktiviert wurden, auch in der Anlagensteuerung AS oder in einem anderen Gerät erfolgen. In diesem Fall muss die Information über die Position des fahrerlosen Transportmittels EMS dann über entsprechende - bevorzugt ausfallsichere - Datenkanäle an die vergleichende Instanz, beispielsweise die Anlagensteuerung AS, übertragen werden, und weiterhin muss diese vergleichende Instanz mittels einer eindeutigen Identifikationsnummer oder mittels einer Ortsangabe über den Standort des betätigten Bedienmittels N-A bzw. des ausgelösten Sensors TLS, LG informiert sein.

Bei der Konfiguration des hier beschriebenen TransportSystems mit dem fahrerlosen Transportmittel EMS ist in der digitalen Steuerung EMS-D ein Wertebereich des Fahrweges hinterlegt worden, der einem bestimmten Wertebereich der Barcode-Leiste BCL entspricht. Dieser Wertebereich wird im Folgenden als dasjenige Segment des Fahrweges betrachtet, welches mit den dargestellten Bedienmitteln N-A und den dargestellten Sensoren TLS, LG verknüpft ist. Dies bedeutet, dass in denjenigen Fällen, in denen sich das fahrerlose Transportmittel EMS in dem definierten Segment befindet, eine Betätigung eines der Bedienmittel N-A oder ein Auslösen eines der Sensoren TLS, LG zur Aktivierung eines sicheren Betriebszustandes führen muss. Im einfachsten Fall ist dies ein Not-Halt. In alternativen Ausführungsformen können jedoch für jedes der Bedienmittel N-A und für jeden der Sensoren TLS, LG unterschiedliche Aktionen vorgesehen sein. Insbesondere kann der sichere Betriebszustand auch vom jeweiligen derzeitigen "regulären" Betriebszustand des fahrerlosen Transportmittels EMS abhängen.

Im Folgenden sei angenommen, dass sich das fahrerlose Transportmittel EMS im Bereich (Segment) des mittleren der dargestellten Not-Aus-Taster befindet, und dass eine Hubvorrichtung des fahrerlosen Transportmittels EMS eine Last absenkt. Nun wird der beschriebene Not-Aus-Taster betätigt, wodurch eine Meldung erzeugt wird, die die Seriennummer des Bedienelementes N-A, also des betätigten Not-Aus-Tasters, umfasst und welche darüber hinaus natürlich die Information erfasst, dass dieser Not-Aus-Taster betätigt wurde. Diese Meldung wird über die fehlersichere Datenverbindung FDV an die Anlagensteuerung AS, welche - wie gesagt - fehlersicher ausgeführt ist, übermittelt und dort ausgewertet. In einer Tabelle der Anlagensteuerung AS sind die Identifikationsnummern aller Bedienelemente N-A mit ihrer (hier: ortsfesten) Position verknüpft; d.h., dass anhand der Identifikationsnummer der empfangenen Meldung die Position des betätigten Bedienelementes N-A in Bezug auf das Koordinatensystem der Barcodeleiste BCL ausgelesen wird. Diese Positionsangabe wird in die empfangene Meldung eingefügt, und danach wird die so geänderte Meldung über eine weitere Datenverbindung an den Zugriffspunkt AP übermittelt und von diesem über die ortsfeste Antenne IWALN-RCCS, eine entsprechende Luftstrecke und die fahrzeugseitige Antenne IWLAN-A zu der digitalen Steuerung EMS-D übermittelt. Dort wird die Meldung ausgewertet und die darin enthaltene Ortsinformation (Positionsangabe) des Bedienelementes N-A mit dem derzeitigen Standort des fahrerlosen Transportmittels EMS verglichen. Die Information über den derzeitigen Standort wird dabei fortlaufend und fehlersicher durch die Barcode-Lesegeräte BCR1, BCR2 bereit gestellt. Die digitale Steuerung EMS-D stellt dabei fest, dass die Meldung nicht verworfen werden darf, weil sich das fahrerlose Transportmittel EMS derzeit in einem Segment des Fahrweges befindet, dem auch der betätigte Not-Aus-Taster zugeordnet ist. In einer bereits bei der Konfiguration des Transportssystems erstellten Tabelle, die durch die digitale Steuerung EMS-D zugreifbar ist, ist festgelegt, bei welchem Betriebszustand des fahrerlosen Transportmittels EMS mit welcher Aktion ein sicherer Betriebszustand bei Eintreffen einer Meldung erreicht werden soll. Im vorliegenden Fall ist der derzeitige Betriebszustand des fahrerlosen Transportmittels EMS: "Antrieb: aus; Hubwerk: ein; Hubwerk-Richtung: senken". Während dem Betriebszustand "Antrieb: aus" keine Aktion zur Erreichung eines sicheren Betriebszustandes zugeordnet ist, ist dem Betriebszustand "Hubwerk: ein; Hubwerk-Richtung: senken" die Befehlsfolge "Hubwerk: stopp; Hubwerk: heben 20cm; Hubwerk: stopp" zugeordnet. Diese Aktionsfolge wird nun durchgeführt, wodurch sichergestellt ist, dass ein Mindestabstand zwischen einem (vermuteten) Hindernis und dem abgesenkten Transportgut wiederhergestellt wird. Gleichzeitig wird eine Warnmeldung an benachbarte Transportmittel bzw. deren Steuerungen übermittelt, um unerwünschten Annäherungen vorzubeugen.

In der vorstehend beschriebenen Anordnung wird die Aktivierung des sicheren Betriebszustandes durch ohnehin bereits in den Komponenten vorhandene Funktionen (Fail-Safe-Funktionen) in den Fail-Safe-Steuerungen (CPUs) verwirklicht. Durch den Einsatz zweier unabhängige Messsysteme (im Ausführungsbeispiel: Barcode-gestützte Positionserfassungssysteme) und über eine fehlersichere Auswertung in einer fehlersicheren digitalen Steuerung wird ein sicherer Positionswert ermittelt bzw. erfasst. Mit diesem Positionswert und mit Hilfe der innerhalb des Streckenverlaufs des Transportmittels definierten Sicherheitsbereiche (Segmente) ist es dann möglich, über die fehlersichere Erfassung von Not-Aus- bzw. Sicherheits-Sensoren sichere Abschaltungen oder andere Aktionen durchzuführen. In den Fällen, in denen durch eine Steuerung mehrerer fahrerlose Transportmittel EMS verwaltet werden, muss selbstverständlich noch auf sichere Art und Weise eine Fahrzeugnummer oder eine ähnliche Identifikation des betrachteten fahrerlosen Transportmittels EMS zu den Sicherheitsbereichen bzw. Segmenten zugeordnet werden.

## Patentansprüche

1. Anordnung mit einem fahrerlosen Transportmittel (EMS) und zumindest einem externen Bedienelement (N-A) oder Sensor (TLS, LG) zur Aktivierung eines sicheren Betriebszustandes,
wobei die Anordnung zur Aktivierung des sicheren Betriebszustandes in den Fällen eingerichtet ist, in denen das zumindest eine Bedienelement (N-A) betätigt ist oder der zumindest eine Sensor (TLS, LG) ausgelöst ist und in denen sich das fahrerlose Transportmittel in einem dem betätigten Bedienmittel oder auslösendem Sensor zugeordneten Weg-Segment befindet,
wobei das fahrerlose Transportmittel mittels einer digitalen Steuerung (EMS-D) gesteuert wird,
dass die digitale Steuerung (EMS-D) zum Zugriff auf eine redundante Einrichtung zur Positionserfassung (BCR1, BCR2) des fahrerlosen Transportmittels (EMS) eingerichtet ist,
wobei die digitale Steuerung zum Empfang von Meldungen über die Betätigung des Bedienmittels oder das Auslösen des Sensors eingerichtet ist, wobei die Meldungen jeweils eine Ortsinformation über das die jeweilige Meldung erzeugende Bedienmittel oder Sensor oder über ein mit dem Bedienmittel oder dem Sensor (TLS, LG) jeweils verknüpftes der Weg-Segmente umfasst,
wobei die digitale Steuerung im Falle des Empfangs einer der Meldungen zum jeweiligen Vergleich der derzeitigen Position oder des derzeit durch das fahrerlose Transportmittel benutzten der Weg-Segmente mit der Ortsinformation eingerichtet und im Falle eines positiven Vergleichs zur Aktivierung des sicheren Betriebszustandes eingerichtet ist, und
wobei der sichere Betriebszustand ein Not-Halt des fahrerlosen Transportmittels (EMS) ist,
**dadurch gekennzeichnet,**
**dass** die redundante Einrichtung zur Positionserfassung (BCR1, BCR2) zumindest 2 Barcode-Lesegeräte zur fortlaufenden und fehlersicheren Bestimmung der derzeitigen Position des fahrerlosen Transportmittels aufweist, und dass die zumindest 2 Barcode-Lesegeräte
- zum Abtasten einer einzelnen Barcode-Leiste BCL mit einem Versatz zueinander in Fahrtrichtung angeordnet sind, oder
- übereinander zum Abtasten einer doppelt hohen Barcode-Leiste BCL oder zweier benachbarter Barcode-Spuren der Barcode-Leiste BCL in unterschiedlichen Spuren geführt sind.

2. Anordnung nach einem der vorhergehenden Patentansprüche,
**dadurch gekennzeichnet,**
**dass** das fahrerlose Transportmittel (EMS) eine ElektroHängebahn einer Fertigungslinie ist.

3. Anordnung nach einem der vorhergehenden Patentansprüche,
**dadurch gekennzeichnet,**
**dass** das Bedienelement (N-A) ein Not-Aus-Taster ist.

4. Anordnung nach einem der vorhergehenden Patentansprüche,
**dadurch gekennzeichnet,**
**dass** der Sensor ein Lichtvorhang, ein Lichtgitter (LG), eine Lichtschranke oder ein Laser-Scanner (TLS) zur Erfassung der Anwesenheit oder Annäherung einer Person oder eines Hindernisses ist.

5. Anordnung nach einem der vorhergehenden Patentansprüche,
**dadurch gekennzeichnet,**
**dass** die digitale Steuerung (EMS-D) fehlersicher ausgeführt ist.

6. Anordnung nach einem der vorhergehenden Patentansprüche,
**dadurch gekennzeichnet,**
**dass** die digitale Steuerung (EMS-D) derart eingerichtet ist, dass bei Ausfall oder bei Störung eines diesen mit dem Bedienelement (N-A) oder dem Sensor (TLS, LG) verbindenden Datennetzes, der Einrichtung zur Positionserfassung (BCR1, BCR2) des fahrerlosen Transportmittels, der Bedienelemente (N-A) oder der Sensoren (TLS, LG) der sichere Betriebszustand aktiviert wird.

7. Anordnung nach einem der vorhergehenden Patentansprüche,
**dadurch gekennzeichnet,**
**dass** die digitale Steuerung (EMS-D) Bestandteil des fahrerlosen Transportmittels (EMS) ist.

8. Verfahren für ein fahrerloses Transportmittel (EMS) zur Aktivierung eines sicheren Betriebszustandes,
wobei das fahrerlose Transportmittel (EMS) mittels der Betätigung eines Bedienelementes (N-A) oder mittels des Auslösens eines Sensors (TLS, LG) in den sicheren Betriebszustand versetzt wird,
wobei der Fahrweg des fahrerlosen Transportmittels (EMS) mehrere Weg-Segmente umfasst und das Bedienelement (N-A) oder der Sensor (TLS, LG) zumindest einem der Weg-Segmente zugeordnet ist,
wobei eine Meldung zur Aktivierung des sicheren Betriebszustandes von dem Bedienelement (N-A) oder dem Sensor (TLS, LG) zu einer digitalen Steuerung (EMS-D) des fahrerlosen Transportmittels (EMS) übermittelt wird,
wobei die Meldung eine Ortsinformation über den Standort des Bedienelementes (N-A) oder des Sensors (TLS, LG) oder über ein von dem Befehl jeweils betroffenes der Weg-Segmente des Fahrweges umfasst,
wobei die digitale Steuerung (EMS-D) mittels eines redundanten Positionserfassungssystems die zum Zeitpunkt der Verarbeitung der Meldung vorliegende Position des fahrerlosen Transportmittels (EMS) oder das zu diesem Zeitpunkt von dem fahrerlosen Transportmittel (EMS) befahrene Weg-Segment erfasst und mit der in der jeweils zu verarbeitenden Meldung vorliegenden Ortinformation vergleicht und im Falle einer Übereinstimmung den sicheren Betriebszustand für das fahrerlose Transportmittel (EMS) aktiviert, und
wobei als der sichere Betriebszustand ein Not-Halt des fahrerlosen Transportmittels (EMS) vorgesehen wird,
**dadurch gekennzeichnet,**
**dass** die redundante Einrichtung zur Positionserfassung (BCR1, BCR2) zumindest 2 Barcode-Lesegeräte zur fortlaufenden und fehlersicheren Bestimmung der derzeitigen Position des fahrerlosen Transportmittels aufweist, und dass durch die zumindest 2 Barcode-Lesegeräte
- das Abtasten einer einzelnen Barcode-Leiste BCL mit einem Versatz zueinander in Fahrtrichtung, oder
- das Abtasten von unterschiedlichen Spuren übereinander einer doppelt hohen Barcode-Leiste BCL oder zweier benachbarter Barcode-Spuren der Barcode-Leiste BCL durchgeführt wird.

## Claims

1. Arrangement having a driverless means of transport (EMS) and at least one external operating element (N-A) or sensor (TLS, LG) for activating a safe operating state,
the arrangement being set up to activate the safe operating state in the situations in which the at least one operating element (N-A) has been actuated or the at least one sensor (TLS, LG) has been triggered and in which the driverless means of transport is in a route segment assigned to the actuated operating means or triggering sensor,
the driverless means of transport being controlled using a digital controller (EMS-D),
the digital controller (EMS-D) being set up to access a redundant device (BCR1, BCR2) for detecting the position of the driverless means of transport (EMS),
the digital controller being set up to receive messages relating to the actuation of the operating means or the triggering of the sensor, the messages each comprising an item of location information relating to the operating means or sensor generating the respective message or relating to a route segment of the route segments which is respectively linked to the operating means or to the sensor (TLS, LG),
the digital controller being set up, if one of the messages is received, to respectively compare the current position or the route segment of the route segments which is currently used by the driverless means of transport with the location information and being set up to activate the safe operating state in the event of a positive comparison, and
the safe operating state being an emergency stop of the driverless means of transport (EMS),
**characterized in that**
the redundant device (BCR1, BCR2) for detecting the position has at least two barcode readers for continuously determining the current position of the driverless means of transport in a failsafe manner, and
**in that** the at least two barcode readers
- are arranged with an offset with respect to one another in the direction of travel in order to scan an individual barcode strip BCL, or
- are guided above one another in different tracks in order to scan a double-height barcode strip BCL or two adjacent barcode tracks of the barcode strip BCL.

2. Arrangement according to one of the preceding patent claims,
**characterized in that**
the driverless means of transport (EMS) is an electric overhead rail of a production line.

3. Arrangement according to one of the preceding patent claims,
**characterized in that**
the operating element (N-A) is an emergency stop button.

4. Arrangement according to one of the preceding patent claims,
**characterized in that**
the sensor is a light curtain, a light grid (LG), a light barrier or a laser scanner (TLS) for detecting the presence or approach of a person or an obstacle.

5. Arrangement according to one of the preceding patent claims,
**characterized in that**
the digital controller (EMS-D) has a failsafe design.

6. Arrangement according to one of the preceding patent claims,
**characterized in that**
the digital controller (EMS-D) is set up in such a manner that the safe operating state is activated in the event of failure or a fault in a data network connecting it to the operating element (N-A) or to the sensor (TLS, LG), the device (BCR1, BCR2) for detecting the position of the driverless means of transport, the operating elements (N-A) or the sensors (TLS, LG).

7. Arrangement according to one of the preceding patent claims,
**characterized in that**
the digital controller (EMS-D) is part of the driverless means of transport (EMS).

8. Method for a driverless means of transport (EMS) for activating a safe operating state,
the driverless means of transport (EMS) being changed to the safe operating state by actuating an operating element (N-A) or by triggering a sensor (TLS, LG),
the route of the driverless means of transport (EMS) comprising a plurality of route segments and the operating element (N-A) or the sensor (TLS, LG) being assigned to at least one of the route segments,
a message for activating the safe operating state being transmitted from the operating element (N-A) or the sensor (TLS, LG) to a digital controller (EMS-D) of the driverless means of transport (EMS),
the message comprising an item of location information relating to the location of the operating element (N-A) or of the sensor (TLS, LG) or relating to a route segment of the route segments of the route which is respectively affected by the command,
the digital controller (EMS-D) detecting the position of the driverless means of transport (EMS) at the time at which the message is processed or detecting the route segment travelled on by the driverless means of transport (EMS) at this time using a redundant position detection system and comparing it with the location information in the message to be respectively processed and activating the safe operating state for the driverless means of transport (EMS) in the event of a match, and
an emergency stop of the driverless means of transport (EMS) being provided as the safe operating state,
**characterized in that**
the redundant device (BCR1, BCR2) for detecting the position has at least two barcode readers for continuously determining the current position of the driverless means of transport in a failsafe manner, and
**in that** the at least two barcode readers
- scan an individual barcode strip BCL with an offset with respect to one another in the direction of travel, or
- scan different tracks of a double-height barcode strip BCL above one another or two adjacent barcode tracks of the barcode strip BCL.

## Revendications

1. Agencement ayant un moyen ( EMS ) de transport sans conducteur et au moins un élément ( N-A ) de manoeuvre extérieur ou un capteur ( TLS, LG ) pour l'activation d'un état de fonctionnement sécurisé,
dans lequel l'agencement est conçu pour l'activation de l'état de fonctionnement sécurisé dans les cas, dans lesquels le au moins un élément ( N-A ) de manoeuvre est actionné ou le au moins un capteur ( TLS, LG ) est déclenché et dans lesquels le moyen de transport sans conducteur se trouve dans un segment de trajet associé au moyen de commande actionné ou au capteur déclenchant,
dans lequel le moyen de transport sans conducteur est commandé au moyen d'une commande ( EMS-D ) numérique,
en ce que la commande ( EMS-D ) numérique est conçue pour l'accès à un dispositif redondant de détection ( BCR1, BCR2 ) de position du moyen ( EMS ) de transport sans conducteur,
dans lequel la commande numérique est conçue pour la réception de messages par l'intermédiaire de l'actionnement du moyen de manoeuvre ou par l'intermédiaire du déclenchement du capteur, les messages comprenant respectivement une information de localisation par l'intermédiaire du moyen de manoeuvre ou du capteur produisant le message respectif ou par l'intermédiaire de l'un des segments de trajet combiné respectivement au moyen de manoeuvre ou au capteur ( TLS, LG ), dans lequel la commande numérique est conçue pour, dans le cas de la réception de l'un des messages, comparer respectivement la position présente ou le segment de trajet utilisé présentement par le moyen de transport sans conducteur à l'information de localisation et, dans le cas d'une comparaison positive, pour l'activation de l'état de fonctionnement sécurisé et
dans lequel l'état de fonctionnement sécurisé est un arrêt d'urgence du moyen ( EMS ) de transport sans conducteur, **caractérisé**
**en ce que** le dispositif redondant de détection ( BCR1, BCR2 ) de position a au moins deux appareils de lecture de code-barre pour la détermination en continu et sécurisée vis-à-vis d'une erreur de la position actuelle du moyen de transport sans conducteur et en ce que les au moins deux appareils de lecture de code-barre,
- sont disposés pour la détection d'une mire BCL de code-barre avec un décalage l'un par rapport à l'autre dans le sens de marche ou
- sont guidés en des pistes différentes l'une au-dessus de l'autre pour la détection d'une mire BCL de code-barre de hauteur double ou de deux pistes voisines de code-barre de la mire BCL de code-barre.

2. Agencement suivant l'une des revendications précédentes, **caractérisé**
**en ce que** le moyen ( EMS ) de transport sans conducteur est un transporteur aérien électrique d'une ligne de fabrication.

3. Agencement suivant l'une des revendications précédentes, **caractérisé**
**en ce que** l'élément ( N-A ) de manoeuvre est une touche d'arrêt d'urgence.

4. Agencement suivant l'une des revendications précédentes, **caractérisé**
**en ce que** le capteur est un rideau optique, un réseau ( LG ) optique, une cellule photoélectrique, ou un scanner-laser ( TLS ) pour détecter qu'une personne ou qu'un objet est présent ou se rapproche.

5. Agencement suivant l'une des revendications précédentes, **caractérisé**
**en ce que** la commande ( EMS-D ) numérique est réalisée d'une manière sécurisée vis-à-vis d'une erreur.

6. Agencement suivant l'une des revendications précédentes, **caractérisé**
**en ce que** la commande ( EMS-D ) numérique est conçue de manière à, en cas de panne ou de dérangement d'un réseau de données la reliant à l'élément ( N-A ) de manoeuvré ou au capteur ( TLS, LG ), activer le dispositif de détection ( BCR1, BCR2 ) de position du moyen de transport sans conducteur, les éléments ( N-A ) de manoeuvre ou les capteurs ( TLS, LG ) de l'état de fonctionnement sécurisé.

7. Agencement suivant l'une des revendications précédentes, **caractérisé**
**en ce que** la commande ( EMS-D ) numérique fait partie du moyen ( EMS ) de transport sans conducteur.

8. Procédé pour un moyen ( EMS ) de transport sans conducteur d'activation d'un état de fonctionnement sécurisé,
dans lequel on met le moyen ( EMS ) de transport sans conducteur dans l'état de fonctionnement sécurisé à l'aide de l'actionnement d'un élément ( N-A ) de manoeuvre ou à l'aide du déclenchement d'un capteur ( TLS, LG ),
dans lequel le trajet de déplacement du moyen ( EMS ) de transport sans conducteur comprend plusieurs segments de trajet et l'élément ( N-A ) de manoeuvre ou le capteur ( TLS, LG ) est associé au moins à l'un des segments de trajet, dans lequel on transmet un message d'activation de l'état de fonctionnement sécurisé de l'élément ( N-A ) de manoeuvre ou du capteur ( TLS, LG ) à une commande ( EMS-D ) numérique du moyen ( EMS ) de transport sans conducteur,
dans lequel le message comprend une information de localisation sur l'emplacement de l'élément ( N-A ) de manoeuvre ou du capteur ( TLS, LG ) ou sur l'un des segments de trajet concernés respectivement par l'instruction,
dans lequel la commande ( EMS-D ) numérique détecte, à l'aide d'un système de détection de position redondant, la position présente à l'instant du traitement du message du moyen ( EMS ) de transport sans conducteur ou le segment de trajet parcouru à cet instant par le moyen ( EMS ) de transport sans conducteur et le compare à l'information de localisation présente dans le message à traiter respectivement et, dans le cas d'une coïncidence, active l'état de fonctionnement sécurisé pour le moyen ( EMS ) de transport sans conducteur et
dans lequel il est prévu, comme état de fonctionnement sécurisé, un arrêt d'urgence du moyen ( EMS ) de transport sans conducteur,
**caractérisé**
**en ce que** le dispositif redondant de détection ( BCR1, BCR2 ) de position a au moins deux appareils de lecture de code-barre pour la détermination en continu et d'une manière sécurisée vis-à-vis d'une erreur de la position présente du moyen de transport sans conducteur et en ce que, par les au moins deux appareils de lecture de code-barre?
- on effectue la détection d'une mire BCL de code-barre individuelle avec un décalage l'un par rapport à l'autre dans le sens de marche ou
- on effectue la détection de pistes différentes superposées d'une mire BCL de code-barre de hauteur double ou de deux pistes de code-barre voisines de la mire BCL de code-barre.
